# EUROPEAN PATENT SPECIFICATION

(11) **EP 2 263 852 B1**
(45) Date of publication and mention of the grant of the patent: **14.08.2013**
(21) Application number: 10165395.4
(22) Date of filing: 09.06.2010
(51) Int. Cl.: B29C 45/26, B29C 33/30, B29C 45/36, B29C 33/76

(54) **Mold for plastics, particularly of the type of a mold for providing preforms of plastic bottles and the like**
Form für Kunststoffe, insbesondere Form zur Herstellung von Kunststoffvorformlingen für Kunststofflaschen und dergleichen
Moule pour plastiques, en particulier moule pour produire des préformes pour bouteilles en matière plastique et similaires

(30) Priority: 19.06.2009 IT PD20090178
(43) Date of publication of application: 22.12.2010
(73) Proprietor: Acqua Minerale San Benedetto S.P.A., 30037 Scorze' (IT)
(72) Inventor: Zoppas, Matteo, 31015 Conegliano TV (IT)
(74) Representative: Modiano, Micaela Nadia

(56) References cited:
- WO-A-00/35656
- US-A- 3 174 189
- US-A1- 2007 154 589
- US-A1- 2009 061 043

## Description

The present invention relates to a mold for plastics, particularly of the type of a mold for providing preforms of plastic bottles and the like.

Currently, in the field of molding bottles made of plastics, particularly made of polyethylene terephthalate, PET in acronym, molds for preforms are known which are composed by:
- an upper part, which has a plurality of protruding cores, and
- a lower part, which has dies that correspond to the cores and are adapted to receive them by insertion when the mold closes, in order to form the molding impression of the preform.

Preforms notoriously have a threaded collar and a bulb-like body adapted to be subsequently formed in the body of the bottle.

Known molds for preforms have outer side walls for forming the threaded neck, which are supported by the upper part and are actuated by a mechanism that is adapted to open them, in order to release the molded preform, and to close them, in order to form the impression of the threaded collar and of the ring, at the base of the male plug of the core.

The core is connected to a support of the upper part by way of a core supporting jacket.

In particular, the core has a shank provided with a perimetric flange at its free end.

The core supporting jacket has a through opening that has, at its inlet, an abutment seat for the perimetric flange of the shank.

Thus, the core, inserted through the opening of the core supporting jacket, protrudes from it on one side and has, on the other side, the perimetric flange accommodated in the abutment seat.

The core supporting jacket, moreover, has a flange for bolting to the support.

In this manner, upon assembly the perimetric flange is comprised, and therefore locked, between the core supporting jacket and the support, to which the jacket is bolted.

The actuation mechanism of the outer side walls has bars composed of two jaws that are contoured so that each one opens and closes on a group of core supporting jackets.

The side walls are associated with such bars in a complementary manner on the mutually opposite jaws, so as to support them at the base of the male plug, from which such male plug protrudes from the core supporting jacket.

Currently, the need is felt to be able to modify the molding impression of the preform by varying in particular its thickness.

This modification is performed by changing the cores; in fact, cores that have greater space occupations in the dies form with them impressions for preforms whose bulb-like body is thinner and therefore made of less material.

Vice versa, cores that have smaller space occupations in the dies allow to provide preforms that are richer in material, i.e., that have a bulb with thicker walls.

The replacement of cores, associated as described with the upper part of the mold, requires an operator to access the bolts that fix the core supporting jacket to the support.

Therefore, it is necessary to separate from the upper part of the support the bars for actuating the outer side walls, because they cover the bolting flanges.

This operation consists substantially in partially disassembling the mold.

Once the core supporting jacket has been released from the support, it is possible to extract its core and replace it.

Therefore, the core thus replaced can be fixed to the support by bolting the core supporting jacket.

In order to ensure compliance with the predefined size and shape tolerances of the preform to be provded, precise positioning of the core with respect to its corresponding die is required and therefore a centering of the core on the support is performed.

Core replacement is therefore laborious and complicated because it requires, as mentioned,
- the partial disassembly of the mold,
- the unscrewing of the bolts for locking the core supporting jacket to the support, which usually are four for each bolting flange,
- the centering of the replaced core on the support,
- the locking of the replaced core to the support, by bolting thereon the core supporting jacket,
- the reassembly of the mold in order to arrange it in the operating configuration.

US-A-20070154589 discloses a two-piece injection core assembly for injection molding machine tooling, comprising as core body and a core tip that is secured within a socket of the core body, by means of welding or threaded interengagement between the two parts, or in a preferred embodiment by means of a shrink fit relationship between the socket and the core tip.

The aim of the present invention is to provide a mold that allows quick and easy core replacement.

Within this aim, an object of the invention is to propose a mold that allows to replace a core while is in the operating configuration, without being disassembled even only partially.

Another object of the invention is to provide a mold that allows to obtain easily an efficient and steady centering of the core with respect to the die in which the core is inserted during the formation of the preform.

Another object of the invention is to propose a mold that is structurally simple and easy to use and can be manufactured with low costs.

In accordance with the invention, there is provided a mold for plastics as defined in the appended claims.

Further characteristics and advantages of the invention will become better apparent from the following detailed description of a preferred but not exclusive embodiment of the mold according to the invention, illustrated by way of non-limiting example in the accompanying drawings, wherein:
Figure 1 is a sectional exploded enlarged-scale view of a detail of a mold according to the invention;

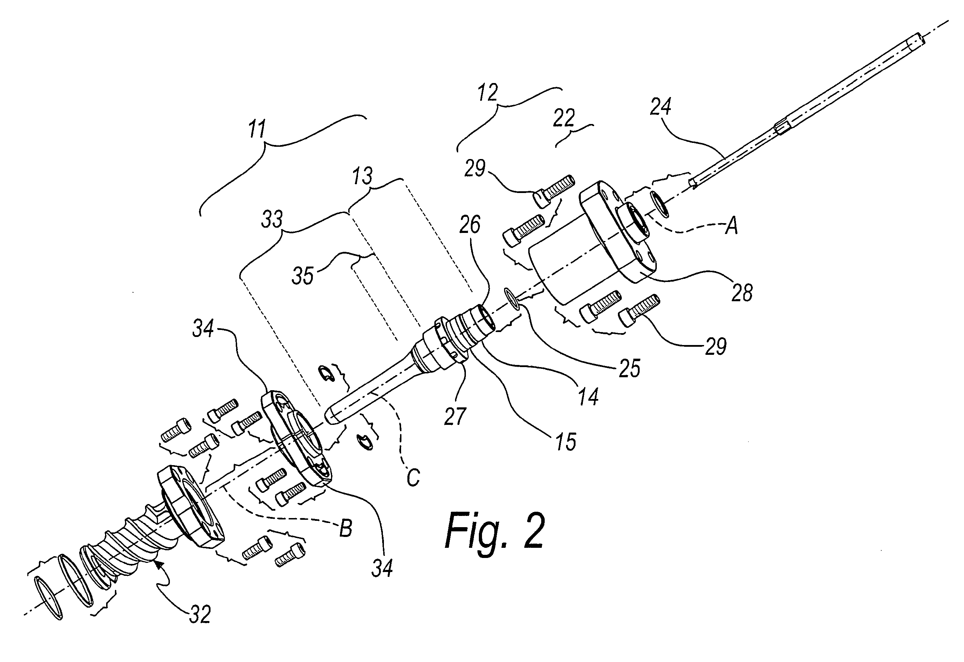

Figure 2 is an exploded perspective view of a part of the mold according to the invention;
Figure 3 is a sectional enlarged-scale view of a detail of the mold according to the invention.

With reference to the figure, the reference numeral 10 generally designates a mold for plastics, particularly of the type of a mold for providing preforms of plastic bottles and the like, which has a connection between a core 11 and a core supporting jacket 12, which comprises
- a shank 13 that is monolithic with the core 11 and is provided with a threaded portion 14 and with a portion 15 for centering the core 11 with respect to the core supporting jacket 12,
- a seat 16 for the insertion of the shank 13, provided in the core supporting jacket 12, which has a threaded part 17 for mating with the threaded portion 14 and a centering part 18 that is shaped complementarily with respect to the centering portion 15 for precision centering of the shank 13 in the insertion seat 16.

Advantageously, the shank 13 has the threaded portion 14 in a position comprised between the centering portion 15 and the free end 13a of the shank 13.

The free end 13a is adapted for insertion in the insertion seat 16, the centering portion 15 being conveniently substantially cylindrical and coaxial to the threaded portion 14; moreover, the threaded portion 14 has a smaller outside diameter than the diameter of the centering portion 15.

The core supporting jacket 12, at the base 12a, conveniently has an abutment 19 for an end locator 20 of the shank 13, the abutment 19 being perimetric with respect to a provided hole 21 that passes between the base 12a and a connector 22 for connecting the core supporting jacket 12 to its support.

The hole 21 forms, together with a compartment 23 provided in the core 11, a seat for an injector 24, which is adapted to introduce coolant into the core 11, means being provided for sealing the abutment 19 with the locator 20, such means being conveniently provided by a gasket 25 inserted in a slot 26 that is perimetric to the mouth of the compartment 23 and corresponds to the abutment 19.

Preferably, the shank 13 has a ring 27 for connection to a tool for unscrewing and screwing the shank 13 with respect to the insertion seat 16.

The ring 27 conveniently has a set of teeth that is adapted for engagement with a complementarily shaped set of teeth with which the unscrewing and screwing tool is provided.

Moreover, the connector 22 conveniently comprises a flange 28 that is provided with screws 29 for bolting it to a supporting element 30, which is a part of the upper part of the mold 10.

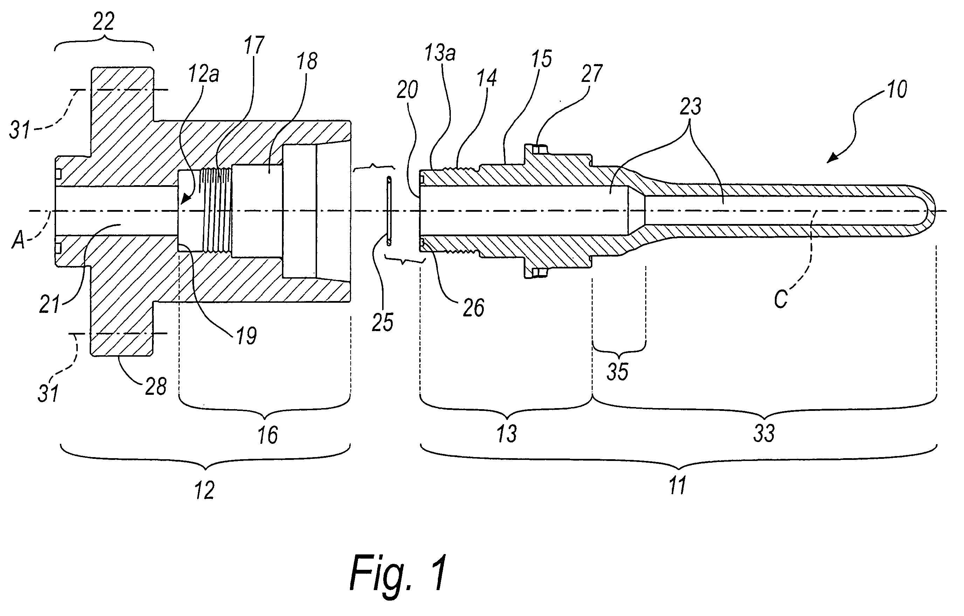

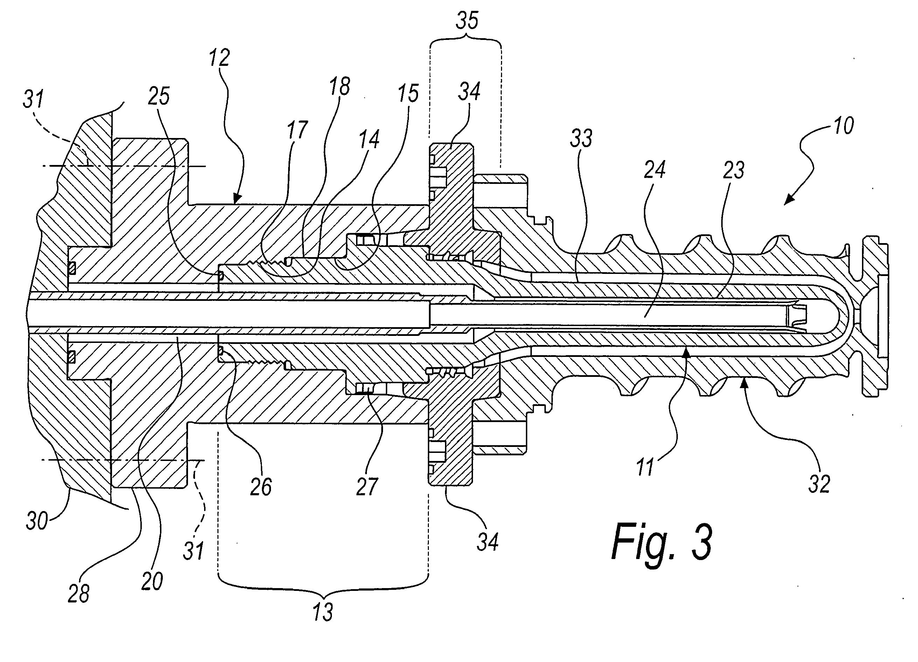

In Figures 1 and 3, engagement seats 31 for the screws 29 are shown schematically with dot-and-dash line segments.

Similarly to what is done during the assembly of currently known molds, upon the assembly of the upper part of the mold, the core supporting jacket 12 is fixed to the support 30, by means of the screws 29, so that the axis A of the jacket is aligned with respect to the axis B of insertion of the core 11 in a die 32, which is supported by the lower part of the mold, as per se known.

For the correct assembly of the mold 10, the axis C of the core, which is the axis of extension of a male plug 33 that constitutes the part of the core 11 that is adapted to be inserted in the die 32 in order to form an impression of the mold 10, conveniently must be aligned with the insertion axis B.

According to the invention, this alignment is ensured by the mating of the shank 13 in the insertion seat 16.

In fact, the insertion of the centering portion 15, of the shank 13, in the centering part 18, of the insertion seat 16, produces the alignment of the axis A of the jacket 12 with the axis C of the core 11.

Therefore, since the axis A of the jacket is preset so as to be aligned with the insertion axis B, said three axes A, B and C are aligned.

A mold 10 has, in its upper part, outer side walls 34, which are adapted to close around a base 35 of the male plug 33 in order to form the part of the impression for forming the threaded collar and the ring of the preform.

When the mold 10 is open, for example between successive molding steps, the outer side walls are open and divaricated from the base 35 of the male plug 33, the die 32, since it is a component of the lower part of the mold 10, is spaced from the male plug.

In this configuration, thanks to the particular structure of the mold 10, according to the invention, an operator can disassemble the core 11 from the core supporting jacket 12, by means of an unscrewing and screwing tool preset to engage the set of teeth of the ring 27.

In fact, it is easy to insert between the outer side walls such a tool so as to engage the ring 27 in order to rotate the core 11, unscrewing its threaded portion 14 from the threaded part 17.

Likewise, it is easy for an operator to mate a core 11 with the core supporting jacket 12.

In this case the operator inserts the shank 13 of the core 11 in the insertion seat 16.

During such insertion, the free end 13a of the shank 13 enters the insertion seat 16, entering through the centering part 18, first, and then through the threaded part 17, thus obtaining gradually a progressive centering of the shank 13 in the insertion seat 16.

When the threaded portion 14 reaches the threaded part 17, the operator can mate them by screwing the core 11 with respect to the core supporting jacket 12, also by means of an unscrewing and screwing tool that engages the ring 27 as mentioned.

During this mating, the centering portion 15 enters the centering part 18, providing the alignment of the axis C of the core with the axis A of the jacket.

Thus, the replacement of a core 11 of a mold 10, according to the invention, requires simply its opening without the need for disassembly.

Moreover, the alignment of the axis C of the core with the insertion axis B is obtained as a direct effect of the precision mating of the core 11 with its core supporting jacket 12, without requiring further operations for adjustment or centering.

In practice it has been found that the invention achieves the intended aim and objects, providing a mold that allows quick and easy replacement of the core; merely the opening of the mold, and not its partial disassembly, is in fact required for this purpose.

Such replacement, moreover, occurs by means of a single operation of unscrewing and screwing of the core in the core supporting jacket, without requiring manual centering.

Moreover, a mold according to the invention allows to obtain an easy, efficient and stable centering of the core with respect to the die, thanks to the mating between the threaded portion of the core and the threaded part of the core supporting jacket.

Moreover, a mold according to the invention is structurally simple and easy to use and can be manufactured with relatively low costs with respect to currently known molds.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

## Claims

1. A mold (10) for plastics, particularly of the type of a mold for providing preforms of plastic bottles and the like, having a connection between core (11) and core supporting jacket (12) that comprises
- a shank (13) that is monolithic with said core (11) and is provided with a threaded portion (14),
- a seat (16) for the insertion of said shank (13), provided in said core supporting jacket (12), which has a threaded part (17) for mating with said threaded portion (14),
**characterized in that** said shank (13) is provided with a portion (15) for centering said core (11) with respect to said core supporting jacket (12), and said seat (16) has a centering part (18) that is shaped complementarily with respect to said centering portion (15) for precision centering of said shank (13) in said insertion seat (16), and said shank (13) has said threaded portion (14) in a position comprised between said centering portion (15) and the free end (13a) of said shank (13), adapted for insertion in said insertion seat (16), said centering portion (15) being substantially cylindrical and coaxial to said threaded portion (14), said threaded portion (14) having a smaller outside diameter than the diameter of said centering portion (15).

2. The mold according to claim 1, **characterized in that** said core supporting jacket (12) has, at its base (12a), an abutment (19) for an end locator (20) of said shank (13), said abutment (19) being perimetric with respect to a provided hole (21) that passes between said base (12a) and a connector (22) for connecting said core supporting jacket (12) to its support, said hole (21) forming, together with a compartment (23) provided in said core (11), a seat for an injector (24) for injecting coolant into said core (11), means for staling said abutment (19) with said locator (20) being provided.

3. The mold according to one or more of the preceding claims, **characterized in that** said shank (13) has a ring (27) for connection to a tool for unscrewing and screwing said shank (13) with respect to said insertion seat (16).

4. The mold according to one or more of the preceding claims, **characterized in that** said ring (27), has, for unscrewing, a set of teeth that is adapted for engagement with a complementarily shaped set of teeth with which said unscrewing and screwing tool is provided.

## Patentansprüche

1. Form (10) für Kunststoffe, insbesondere Form zur Herstellung von Vorformlingen von Kunststoffflaschen und dergleichen, die eine Verbindung zwischen einem Kern (11) und einem kerntragenden Mantel (12) hat, die aufweist
- einen Schaft (13), der monolithisch mit dem Kern (11) ist und mit einem Gewindeabschnitt (14) versehen ist,
- einen Sitz (16) zur Einführung des Schafts (13), der in dem kerntragenden Mantel (12) vorgesehen ist, der einen Gewindeteil (17) zum Ineinandergreifen mit dem Gewindeabschnitt (14) hat,
**dadurch gekennzeichnet, dass** der Schaft (13) mit einem Abschnitt (15) zum Zentrieren des Kerns (11) bezüglich des kerntragenden Mantels (12) versehen ist und der Sitz (16) einen zentrierenden Teil (18) hat, der bezüglich des zentrierenden Abschnitts (15) zum genauen Zentrieren des Schafts (13) in dem Einführungssitz (16) komplementär geformt ist und der Schaft (13) den Gewindeabschnitt (14) an einer Stelle hat, die zwischen dem zentrierenden Abschnitt (15) und dem freien Ende (13a) des Schafts (13) ist, das zur Einführung in den Einführungssitz (16) ausgebildet ist, wobei der zentrierende Abschnitt (15) im Wesentlichen zylindrisch und koaxial zu dem Gewindeabschnitt (14) ist, wobei der Gewindeabschnitt (14) einen kleineren Außendurchmesser als der Durchmesser des zentrierenden Abschnitts (15) hat.

2. Form nach Anspruch 1, **dadurch gekennzeichnet, dass** der kerntragende Mantel (12) an seiner Basis (12a) ein Widerlager (19) für einen Endlagefixierer (20) des Schafts (13) hat, wobei das Widerlager (19) umfänglich bezüglich eines vorgesehenen Loches (21) ist, das zwischen der Basis (12a) und einem Verbindungsstück (22) zum Verbinden des kerntragenden Mantels (12) mit seinem Träger hindurchgeht, wobei das Loch (21) zusammen mit einem in dem Kern (11) vorgesehenen Fach (23) einen Sitz für einen Injektor (24) zum Einspritzen von Kühlmittel in den Kern (11) bildet, wobei Mittel zum Abdichten des Widerlagers (19) mit dem Lagefixierer (20) vorgesehen sind.

3. Form nach einem oder mehreren der vorhergehenden Ansprüche, **dadurch gekennzeichnet, dass** der Schaft (13) einen Ring (27) zur Verbindung mit einem Werkzeug zum Aufschrauben und Einschrauben des Schafts (13) bezüglich des Einführungssitzes (16) hat.

4. Form nach einem oder mehreren der vorhergehenden Ansprüche, **dadurch gekennzeichnet, dass** zum Aufschrauben der Ring (27) einen Satz Zähne hat, der zum Eingriff mit einem komplementär geformten Satz Zähne ausgebildet ist, mit dem das Aufschraub- und Einschraubwerkzeug versehen ist.

## Revendications

1. Moule (10) pour matière plastique, particulièrement du type pour réaliser des bouteilles en plastique ou équivalent, présentant une liaison entre un noyau (11) et un manchon (12) de support à noyau qui comporte :
- un arbre (13) qui est monolithique avec ledit noyau (11) et pourvu d'une partie filetée (14),
- un siège (16) pour l'insertion dudit arbre (13), prévu dans ledit manchon (12) de support de noyau, qui présente une partie filetée (17) apte à coopérer avec ladite partie filetée (14),
**caractérisé en ce que** ledit arbre (13) est pourvu d'une partie (15) pour le centrage dudit noyau (11) par rapport audit manchon (12) de support de noyau et ledit siège (16) présente une partie centrale (18) qui est de forme complémentaire à ladite partie de centrage (15), pour réaliser un centrage de précision dudit arbre (13) dans ledit siège d'insertion (16), et ledit arbre (13) présente sa partie filetée (14) dans une position comprise entre ladite partie de centrage (15) et l'extrémité libre (13a) dudit arbre (13), apte à être insérée dans ledit siège d'insertion (16), ladite partie de centrage (15) étant sensiblement cylindrique et coaxiale à ladite partie filetée (14), cette dernière présentant un diamètre extérieur plus petit que le diamètre de ladite partie de centrage (15).

2. Moule selon la revendication 1, **caractérisé en ce que** ledit manchon (12) de support de noyau présente, à sa base (12a), un élément (19) de butée pour un repère d'extrémité (20) dudit arbre (13), ladite butée (19) étant périmétrique par rapport à un trou prévu (21), qui passe entre ladite base (12a) et un connecteur (22), destiné à la connexion dudit manchon (12) de support de noyau sur son support, ledit trou (21) formant, avec un compartiment (23) prévu dans ledit noyau (11), un siège pour un injecteur (24) destiné à l'injection de matériaux réfrigérants dans ledit noyau (11), des moyens pour sceller ladite butée (19) avec ledit repère d'extrémité (20) étant prévus.

3. Moule selon l'une des revendications précédentes, **caractérisé en ce que** ledit arbre (13) présente un anneau (27) pour la connexion avec un outil de dévissage / vissage dudit arbre (13), par rapport audit siège d'insertion (16).

4. Moule selon l'une des revendications précédentes, **caractérisé en ce que** ledit anneau (27) présente, pour le dévissage, un jeu de dents qui est apte à venir en engagement avec un jeu de dents de forme complémentaire, dont est pourvu l'outil de vissage / dévissage.
